(19) **Europäisches Patentamt / European Patent Office / Office européen des brevets**

(11) **EP 1 984 628 B1**

(12) ## EUROPEAN PATENT SPECIFICATION

(45) Date of publication and mention
of the grant of the patent:
**17.12.2014 Bulletin 2014/51**

(51) Int Cl.:
*F04D 17/12* *(2006.01)*        *F04D 25/16* *(2006.01)*
*F04D 27/02* *(2006.01)*

(21) Application number: **07756926.7**

(22) Date of filing: **13.02.2007**

(86) International application number:
**PCT/US2007/062066**

(87) International publication number:
**WO 2007/095537 (23.08.2007 Gazette 2007/34)**

(54) **MULTI-STAGE COMPRESSION SYSTEM AND METHOD OF OPERATING THE SAME**

MEHRSTUFIGES KOMPRESSIONSSYSTEM UND VERFAHREN ZU DESSEN BETRIEB

SYSTEME DE COMPRESSION A PLUSIEURS ETAGES ET SON PROCEDE D'ACTIONNEMENT

(84) Designated Contracting States:
**DE ES FR GB IT**

(30) Priority: **13.02.2006   US 772715 P**

(43) Date of publication of application:
**29.10.2008   Bulletin 2008/44**

(73) Proprietor: **INGERSOLL-RAND COMPANY
Montvale, NJ 07645 (US)**

(72) Inventors:
  • **DINSDALE, Britton D.
    Mooresville, NC 28115 (US)**
  • **MULLER, Michael O.
    Charlotte, NC 28207 (US)**

  • **ROBB, James L.
    Rockwell, NC 28138 (US)**

(74) Representative: **Roberts, Peter David et al
Marks & Clerk LLP
1 New York Street
Manchester, M1 4HD (GB)**

(56) References cited:
**EP-A2- 0 864 755      WO-A1-01/31202
WO-A1-96/18818      WO-A1-2005/068847
GB-A- 2 372 539      US-A- 5 224 836
US-A- 5 473 899      US-A- 5 547 350
US-A- 5 980 218      US-B2- 6 579 078**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a system and method to control a centrifugal compression system as defined in the preambles of Claims 1 and 10, respectively. Such a system is known e.g. from GB-A-2372539. In particular, the invention relates to a control system and method that varies the speed of multiple compression stages while maintaining constant speed ratios.

Compressors, and more particularly centrifugal compressors, operate across a wide range of operating parameters. Variation of some of these parameters may produce undesirable efficiency and capacity variations.

Compression of a gas in centrifugal compressors, also known as dynamic compressors, is based on the transfer of energy from a set of rotating blades to a gas such as air. The rotating blades impart energy by changing the momentum and pressure of the gas. The gas momentum, which is related to kinetic energy, is then converted into pressure energy by decreasing the velocity of the gas in stationary diffusers and downstream collecting systems.

The performance of a multi-stage centrifugal compression system is impacted by conditions of the gas at the inlet, such as pressure, temperature, and relative humidity, and by the operating speed of the compressor stages. Specifically, for a given rotational speed of a stage, variations in pressure, temperature, and relative humidity of the gas at the inlet of that compression stage will alter the compressor discharge head and capacity. Additionally, a change in the operating rotational speed of a stage of compression also results in a change in the performance parameters of the overall compressor in terms of discharge head, capacity, and thermodynamic efficiency. It is relevant to note that in dynamic compressors there is a dependent relationship between capacity and compression ratio, defined as the discharge pressure divided by the inlet pressure (in consistent units). Accordingly, a change in gas capacity is always accompanied by a change in the compression ratio. As the operating point of the compressor changes, the efficiency of the compression thermodynamic process will also change.

GB2372539 discloses a variable speed compressor system with a plurality of compressors connected in series. A control device controls the compressors in the respective stages and may be used to allow the operation of a reduced number of compressors when only a small output is required.

According to the present invention there Is provided a multi-stage compression system as defined in claim 1.

According to a second aspect of the present invention there is provided method of controlling a multi-stage compression system to deliver gas to a gas utilization system that uses the gas at a variable rate, according to claim 10.

Fig. 1 is a cross-sectional view of a centrifugal compression stage;

Fig. 2 is a schematic of a multi-stage compression system including three centrifugal compression stages of Fig. 1; and

Fig. 3 is a performance map of the centrifugal variable speed compression stage of Kg. 1.

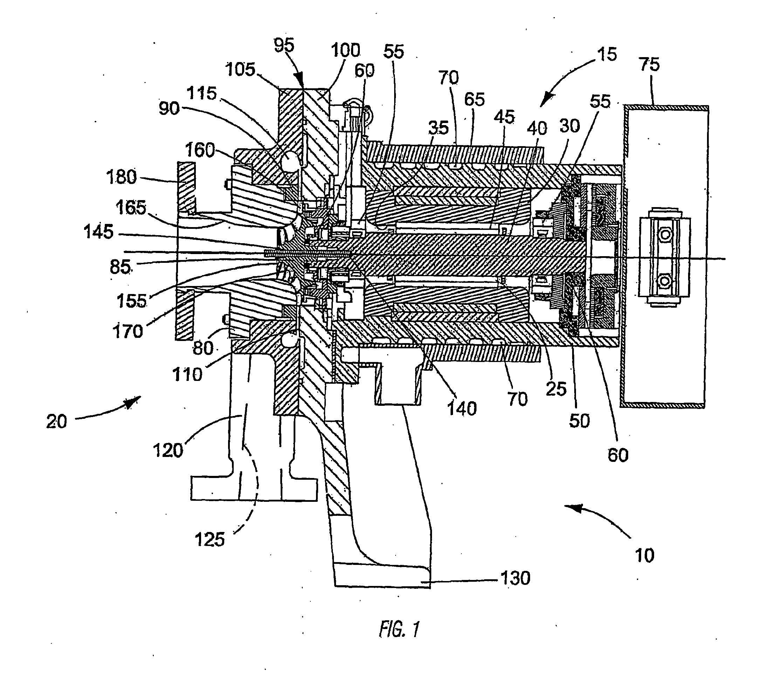

Fig. 1 illustrates a fluid compression module 10 (sometimes referred to as a compression stage or a compression unit) that includes a prime mover coupled to a compressor 20 and that is operable to produce a compressed fluid. In the illustrated construction, an electric motor 15 is employed as the prime mover. However, other constructions may employ other prime movers such as but not limited to internal combustion engines, diesel engines, combustion turbines, etc.

The electric motor 15 includes a rotor 25 and a stator 30 that defines a stator bore 35. The rotor 25 is supported for rotation on a shaft 40 and is positioned substantially within the stator bore 35. The illustrated rotor 25 includes permanent magnets 45 that interact with a magnetic field produced by the stator 30 to produce rotation of the rotor 25 and the shaft 40. In one construction, the rotor 25 is operable between about 0 RPM and 50,000 RPM, with faster speeds also being possible. Before proceeding, it should be noted that the word "between" as used herein in conjunction with discussions of operating speeds of the motors or compression stages means that the motor or compression stage is operable at any speed between the defined end points (e.g., 0 RPM, 50,000 RPM) and including the end points. Thus, a two-speed motor (i.e., one operable at 0 RPM and 50,000 RPM) is not operable between 0 RPM and 50,000 RPM. Rather, it is operable at 0 RPM and it is operable at 50,000 RPM. A motor operable between two speeds is operable at those two speeds as well as any intermediate speed between the end points. The magnetic field of the stator 30 can be varied to vary the speed of rotation of the shaft 40. Of course, other constructions may employ other types of electric motors (e.g., synchronous, induction, brushed DC motors, etc.) if desired.

The motor 15 is positioned within a housing 50 which provides both support and protection for the motor 15. A bearing 55 is positioned on either end of the housing 50 and is directly or indirectly supported by the housing 50. The bearings 55 in turn support the shaft 40 for rotation. In the illustrated construction, magnetic bearings 55 are employed with other bearings (e.g., roller, ball, needle, etc.) also suitable for use. In the construction illustrated in Fig. 1, secondary bearings 60 are employed to provide shaft support in the event one or both of the magnetic bearings 55 fail.

In some constructions, an outer jacket 65 surrounds a portion of the housing 50 and defines cooling paths 70 therebetween. A liquid (e.g., glycol, refrigerant, etc.) or gas (e.g., air, carbon dioxide, etc.) coolant flows through the cooling paths 70 to cool the motor 15 during operation.

An electrical cabinet 75 may be positioned at one end of the housing 50 to enclose various items such as a motor controller, breakers, switches, and the like. The motor shaft 40 extends beyond the opposite end of the housing 50 to allow the shaft to be coupled to the compressor 20.

The compressor 20 includes an intake housing 80 or intake ring, an impeller 85, a diffuser 90, and a volute 95. The volute 95 includes a first portion 100 and a second portion 105. The first portion 100 attaches to the housing 50 to couple the stationary portion of the compressor 20 to the stationary portion of the motor 15. The second portion 105 attaches to the first portion 100 to define an inlet channel 110 and a collecting channel 115. The second portion 105 also defines a discharge portion 120 that includes a discharge channel 125 that is in fluid communication with the collecting channel 115 to discharge the compressed fluid from the compressor 20.

In the illustrated construction, the first portion 100 of the volute 95 includes a leg 130 that provides support for the compressor 20 and the motor 15. In other constructions, other components are used to support the compressor 20 and the motor 15 in the horizontal position. In still other constructions, one or more legs, or other means are employed to support the motor 15 and compressor 20 in a vertical orientation or any other desired orientation.

The diffuser 90 is positioned radially inward of the collecting channel 115 such that fluid flowing from the impeller 85 passes through the diffuser 90 before entering the volute 95. The diffuser 90 includes aerodynamic surfaces (e.g., blades, vanes, fins, etc.) arranged to reduce the flow velocity and increase the pressure of the fluid as it passes through the diffuser 90.

The impeller 85 is coupled to the rotor shaft 40 such that the impeller 85 rotates with the motor rotor 25. In the illustrated construction, a rod 140 threadably engages the shaft 40 and a nut 145 threadably engages the rod 140 to fixedly attach the impeller 85 to the shaft 40. The impeller 85 extends beyond the bearing 55 that supports the motor shaft 40 and, as such is supported in a cantilever fashion. Other constructions may employ other attachment schemes to attach the impeller 85 to the shaft 40 and other support schemes to support the impeller 85. As such, the invention should not be limited to the construction illustrated in Fig. 1. Furthermore, while the illustrated construction includes a motor 15 that is directly coupled to the impeller 85, other constructions may employ a speed increaser such as a gear box to allow the motor 15 to operate at a lower speed than the impeller 85.

The impeller 85 includes a plurality of aerodynamic surfaces or blades that are arranged to define an inducer portion 155 and an exducer portion 160. The inducer portion 155 is positioned at a first end of the impeller 85 and is operable to draw fluid into the impeller 85 in a substantially axial direction. The blades accelerate the fluid and direct it toward the exducer portion 160 located near the opposite end of the impeller 85. The fluid is discharged from the exducer portion 160 in at least partially radial directions that extend 360 degrees around the impeller 85.

The intake housing 80, sometimes referred to as the intake ring, is connected to the volute 95 and includes a flow passage 165 that leads to the impeller 85. Fluid to be compressed is drawn by the impeller 85 down the flow passage 165 and into the inducer portion 155 of the impeller 85. The flow passage 165 includes an impeller interface portion 170 that is positioned near the blades of the impeller 85 to reduce leakage of fluid over the top of the blades. Thus, the impeller 85 and the intake housing 80 cooperate to define a plurality of substantially closed flow passages.

In the illustrated construction, the intake housing 80 also includes a flange 180 that facilitates the attachment of a pipe or other flow conducting or holding component. For example, a filter assembly can be connected to the flange 180 and employed to filter the fluid to be compressed before it is directed to the impeller 85. A pipe may lead from the filter assembly to the flange 180 to substantially seal the system after the filter and inhibit the entry of unwanted fluids or contaminates. In other embodiments, a pipe leads from the outlet of one stage to the inlet of a second stage. The pipe connects at the flange 180.

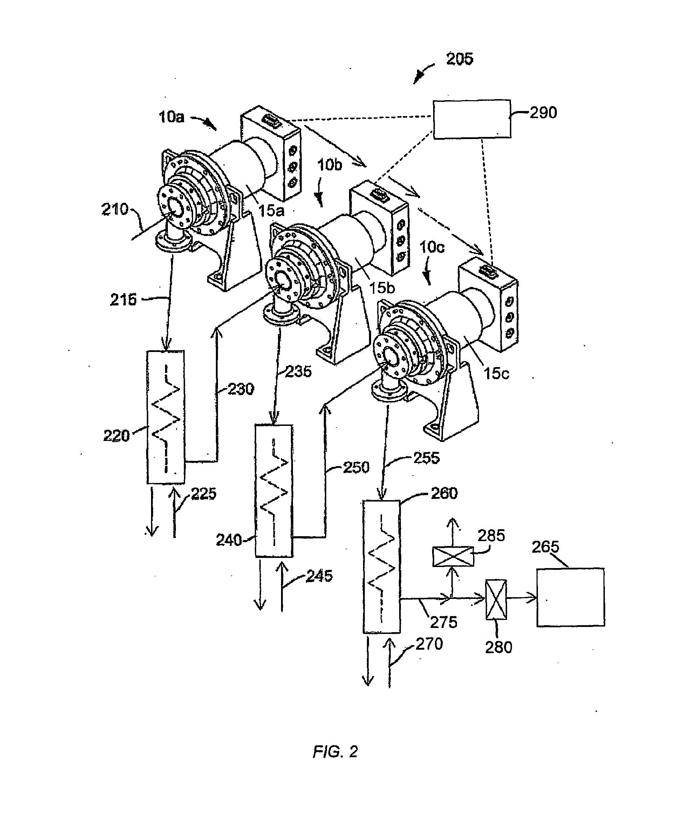

Fig. 2 illustrates three compression stages 10a, 10b, 10c arranged in series to define a multi-stage compression system 205. In the illustrated construction, each compression stage 10a, 10b, 10c is similar to the compression module 10 of Fig. 1. However, other constructions may use different compression modules altogether, or may include a combination of different compression module types.

For purposes of description, Fig. 2 will be described using air as the fluid being compressed. Of course one of ordinary skill in the art will realize that many other fluids can be compressed using the present system. The first stage 10a draws in a flow of air 210 in an uncompressed state and discharges a flow of partially-compressed air 215.

The partially compressed air flow 215 passes to an inter-stage heat exchanger or cooler 220 that cools the partially compressed air flow 215 to improve the overall compression system efficiency. In the illustrated, construction, a cooling fluid 225 (e.g., cool air, water, glycol, refrigerant, etc.) flows through the heat exchanger 220 to cool the air 215.

A cooled partially compressed air flow 230 passes into the inlet of the second stage 10b of the multi-stage compression system 205. The second stage 10b further compresses the air and discharges a second flow of partially compressed air 235.

The second flow of partially compressed air 235 flows through a second inter-stage heat exchanger 240 where the air is again cooled by a coolant 245 that flows through the heat exchanger 240. After passing through the second inter-stage heat exchanger 240, a cooled partially compressed air flow 250 proceeds to the third compression stage 10c.

The third stage 10c receives the partially compressed air flow 250 at the inlet and is operable to further compress the air to the final desired output pressure. A compressed air flow 255 is discharged from the third stage 10c at the desired output pressure.

A final inter-stage cooler 260 may be employed following the final compression stage 10c to cool the air before being directed to additional systems (e.g., valves, filters, dryers, etc.) or to a compressed gas utilization system 265. As with the other heat exchangers 220, 240 a flow of coolant 270 is used to cool the air before the air is discharged as a final flow of compressed air 275.

The heat exchangers 220, 240, 260 may be, for example, counter-flow heat exchangers, cross-flow heat exchangers, or parallel flow heat exchangers. In some constructions, the heat exchangers 220, 240, 260 may be plate-fin heat exchangers, shell and tube heat exchangers, or any other type operable to exchange heat between the compressed air flow 210, 235,255 and the cooling fluids 225, 245, 270, respectively. In addition, one or more of the heat exchangers 220, 240, 260 may be configured as a regenerative heat exchanger, using a compressed air flow as the cooling fluid.

The multi-stage compression system 205 also includes a check valve 280 and a blow-off valve 285, both located downstream of the last compression stage 10c. The check valve 280 isolates the compression system 205 from the compressed gas utilization system 265 during periods when the compression system 205 is not running or when the exit pressure at the third stage 10c is lower than the operating pressure of the utilization system 265. The blow-off valve 285 allows a portion of compressed gas to be discharged from the compression system 205 when the compressed gas generated exceeds the demand of the utilization system 265.

While Fig. 2 illustrates a three-stage compression system 205 employing a single compressor 20 at each stage 10a, 10b, 10c, other systems may employ fewer or more than three stages to meet the requirements of the gas utilization system 265. In addition, some arrangements may include multiple compressors at one or more of the stages (i.e., parallel operation) to increase the capacity of the system 205. As such, the invention should not be limited to a three-stage compression system that employs only a single compressor at each stage with the stages arranged in series.

As illustrated in Fig. 2, the multi-stage compression system 205 includes three stages 10a, 10b, 10c that are mechanically de-coupled from one another with each driven by a highspeed, variable speed electric motor 15a, 15b, 15c. As mentioned above, the compression stages 10a, 10b, 10c are arranged in series such that air passes sequentially through each stage 10a, 10b, 10c before exiting the last compression stage 10c and flowing to the compressed gas utilization system 265.

The control system 290 varies the rotational speeds of the stages 10a, 10b, 10c simultaneously in response to a variety of inputs. For example, in one construction, the control system 290 monitors the volumetric flow rate exiting the final stage 10c as well as the pressure of the flow exiting the final stage 10c and uses this data to control the speed of the individual motors 15a, 15b, 15c. In other constructions, the control system 290 monitors the pressure at the gas utilization system 265 and/or the rate of use at the gas utilization system 265.

The control system 290 may include sensors for sensing pressure, temperature, and flow rate at various points within the system 205. Additionally, the control system 290 may include control logic algorithms and associated hardware to run the algorithms and monitor the system parameters. Furthermore, the control system 290 may include supplemental hardware for powering the electric motors 15a, 15b, 15c and regulating their speeds in response to the measured system parameters. The control system 290 is designed to regulate the performance of the centrifugal compression stages 10a, 10b, 10c without the use of an inlet throttling valve. However, in some constructions, a throttling valve may still be provided at the inlet of the first compression stage 10a. In one control system 290 sensors are employed to measure the power (kW) consumed by one or more of the motors. This power consumption is then used to control the speed of the motors.

While each stage 10a, 10b, 10c is mechanically decoupled from the other stages, constructions employ a control system 290 that varies the speed of the motors 15a, 15b, 15c synchronously. For example, in one construction, the first motor 15a operates at a first speed between a low speed and a high speed, the second motor 15b operates at a second speed between a low speed and a high speed, and the third motor 15c operates at a third speed between a low speed and a high speed. In this example, the speed of each motor 15a, 15b, 15c is varied by the control system 290 at the same time such that the ratio of the speeds of any two motors 15a, 15b, 15c remains constant. Thus, if the speed of the first motor 15a is doubled, the speeds of the second motor 15b and the third motor 15c are also doubled. In one construction, the first speed, the second speed, and the third speed are substantially the same. However, different speeds could be employed if desired.

During the compression process, each stage 10a, 10b, 10c imparts energy to the air in the form of pressure and motion. While the mass flow through the compression system 205 remains practically constant, with the exception of some amount of air that escapes through various seals, the volume of the air is reduced from stage to stage as the pressure increases. Customarily, the gas leakage flow is limited to between 1 percent and 2 percent of the volumetric inlet capacity of the compressor 20.

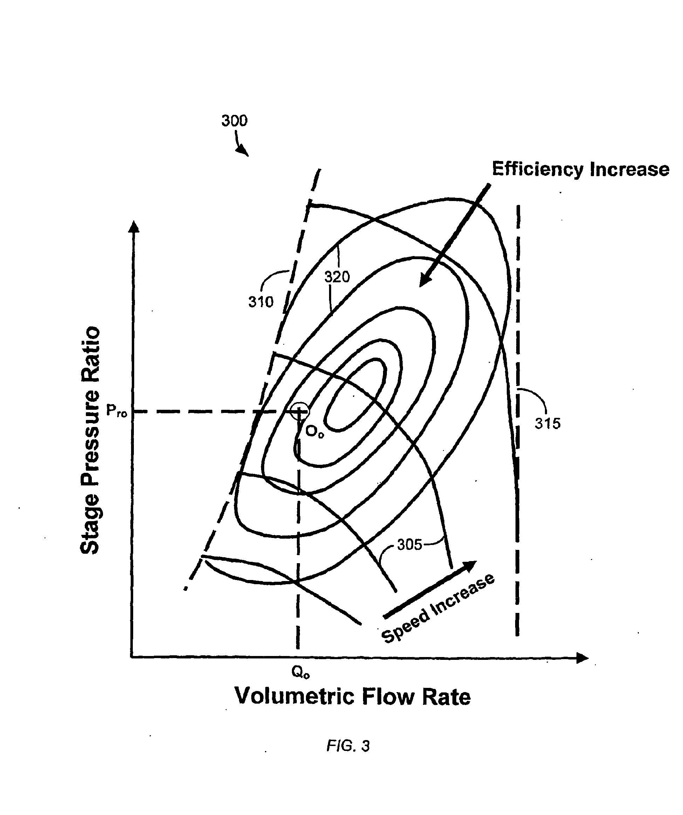

A typical centrifugal compressor performance map 300 is shown in Fig. 3. Fig. 3 can be interpreted as the characteristic performance map of a multi-stage centrifugal compression system, or as the characteristic performance map of a single stage of compression, although the specific values for each of the curves will be different depending on which Map it is. From Fig. 3, it can be readily deduced that if the process demand departs from an operating point $O_0$,

a variation in the operating speed of the multi-stage compression system 205 may satisfy the new process demand while maintaining a high level of operating efficiency.

For a given fixed rotational speed (shown in Fig. 3 as constant speed lines 305) of a centrifugal compressor stage, a relationship exists between capacity and stage pressure ratio. Fig. 3 suggests that an increase in capacity is accompanied by a decrease in pressure ratio. Conversely, a decrease in capacity corresponds to an increase in the pressure ratio of the compression stage. When multiple stages are connected in series the pressure of the gas is incrementally increased. If the inlet of an intermediate stage coincides with the discharge of the immediately upstream stage, and the discharge of any stage coincides with the inlet of the following stage, the pressure ratio of each stage accounts for interstage losses. The pressure ratio of a complete multi-stage compressor can be expressed as the product of the pressure ratios, $R_i$, of the individual stages. The discharge pressure from the last stage of compression, $P_{disch}$, would then be equal to the product of the compressor pressure ratio, $R_{comp}$, times the inlet pressure, $P_{inlet}$, to the compressor, as indicated by the following equation:

$$P_{disch} = (R_1 x R_2 x, ..., x R_N) x P_{inlet} = R_{comp} x P_{inlet} \qquad (1)$$

The demand of the downstream compressed gas utilization system 265 dictates the flow and pressure conditions at which the compression system 205 operates. An increase in system pressure indicates a supply of compressed gas that exceeds the demand of the receiving system (i.e., compressed gas is being delivered faster than it is being used). Similarly, a decrease in receiving system pressure triggers a request of a greater capacity from the compression system 205 to maintain, in the case of a constant pressure process, the target operating pressure (i.e., gas is being used faster than it is being delivered). When Equation (1) is applied to a constant speed compressor, with performance corresponding to one speed line 305 in the diagram of Fig. 3, and the condition of a constant discharge pressure is imposed, i.e. $P_{disch}$=Constant, then a required capacity change to accommodate the process demand will affect the pressure ratio of the compression system 205 since the pressure ratio of each stage 10a, 10b, 10c is uniquely linked to a given capacity. It follows that since the term on the left-hand side of Equation (1) is constant, and the pressure ratio of the compression system 205 physically changes, then the inlet pressure to the first compression stage 10a assumes a value so that the product in Equation (1) remains, in fact, constant.

As an example, if the capacity handled by the compression system 205 is reduced in order to counteract a contingent increase in system pressure, the pressure ratio of the compression system 205 increases because, based on the performance characteristics of centrifugal compressors, a decrease in capacity corresponds to an increase in compressor pressure ratio. Accordingly, to maintain constant pressure at the discharge of the compression system 205, the inlet pressure to the compression system 205, $P_{inlet}^{(New)}$, assumes a new value equal to:

$$\frac{P_{disch}}{R_{comp}^{(New)}} = P_{inlet}^{(New)} \qquad (2)$$

where:

$R_{comp}^{(New)}$     = Compressor pressure ratio corresponding to the required flow

$P_{inlet}^{(New)}$     = Updated, new inlet pressure at the first stage of compression to maintain the required constant discharge pressure

The change in the inlet pressure of a first stage of compression, in the case of an open to atmosphere compression system, is typically obtained in prior art systems by interposing a throttling valve between the atmospheric environment and the inlet of the first stage of compression. Following the example at hand, a calibrated closure of the inlet throttling valve introduces a pressure drop, thus reducing the pressure at the inlet of the first compression stage. The new reduced inlet pressure that satisfies Equation (2), when multiplied by the increased pressure ratio required to achieve a smaller compressor capacity, yields the required constant pressure at the discharge of the compression system. This is the most common regulation system for fixed speed compressors, and while it properly controls the capacity of a centrifugal compressor, it also introduces an energy loss because of the presence of the inlet throttling valve.

However, an unaltered pressure ratio of the compression stages 10a, 10b, 10c, under a changing capacity requirement, can also be satisfied by modifying the operating speed of the stages 10a, 10b, 10c. Accordingly, the overall pressure ratio of the compression system 205 can be maintained as the capacity is adjusted to the demand of the utilization system 265. Since the discharge pressure of the compression system 205 is maintained, under changing capacity requirements, on the basis of the relationship that is uniquely related to the pressure ratio, the capacity, and the rotational speed of the compression stages 10a, 10b, 10c, there is no requirement to alter the inlet pressure to the first stage 10a with a regulating inlet throttling valve. In fact, with reference to Equation (2), if the compressor pressure ratio is maintained constant, then the inlet pressure to the first stage 10a does not need to be changed to maintain a value for the discharge pressure. Because of the change in capacity, the inlet pressure of the compression system 205 may actually change because of changes in the pressure losses that are linked to the contingent capacity. Nonetheless, in this context, it is emphasized that the control system 290 does not require the first stage inlet pressure to be varied by means of a throttling valve, and accordingly there is no throttling valve. It should be noted that the removal of the inlet throttling valve directly improves the efficiency of the first stage 10a, reduces control software complexity, eliminates hardware, and improves costs as compared to fixed speed systems that include the throttling valve.

Each stage 10a, 10b, 10c in the multi-stage compression system 205 is designed to handle fluid having a certain inlet pressure range, but particularly a defined intake volume rate range. Because the stages 10a, 10b, 10c, are in series, each stage 10a, 10b, 10c is flow-matched to the others so as to allow for the proper transfer of fluid from one stage to the next. Accordingly, if for some reason one stage is not in the condition to accept the flow delivered by an upstream stage, or does not deliver the flow at the intended pressure and volume to the next stage, a disruption in the operation of the multi-stage compression system 205 may occur, thereby resulting in an upset in the performance of all the stages 10a, 10b, 10c in the compression system 205. Because of the gas dynamics accompanying the behavior of centrifugal compressors, a condition of flow instability may quickly develop which requires the unloading of the compression system 205 to properly handle and suppress the unstable situation.

The performance of the compression system 205 is particularly sensitive to the variation in rotational speed of the stages 10a, 10b, 10c. Compressor stage capacity varies linearly with speed, head changes vary proportionally to the square of the speed, and power varies as the cube of the stage speed. Because of the aerodynamic coupling between compressor stages 10a, 10b, 10c in series, the approach of independently changing the speed of each stage 10a, 10b, 10c, when the stages 10a, 10b, 10c are mechanically de-coupled, requires a significant level of sophistication and control logic complexity. The operating conditions of each compression stage 10a, 10b, 10c is monitored in terms of gas pressure, temperature, and flow, so as to predict the speed change for one stage in conjunction with the speed of the other stages, while not upsetting the internal operation of each compression stage 10a, 10b, 10c and while satisfying the demand of the utilization system 265.

The rate of change in fluid flow demand of the utilization system 265 adds complications to an approach of independently regulating the speeds of the stages 10a, 10b, 10c because background calculations are performed before attempting the adaptation of the compression system 205 to the variation in the operating conditions of the utilization system 265. A significant time delay may be introduced between the acknowledgement that the process conditions are changing and an action is taken to satisfy the process demand. Moreover, a predetermined databank must be available to the computational control algorithms so as to reasonably predict the appropriate speed regulation of the independently driven centrifugal compressor stages 10a, 10b, 10c present in the compression system 205.

An explorative type approach may be employed, where changes are made in a semi-static compressor operating condition so as to prevent transient driven upsets within the compressor system while continuing to satisfy the utilization system demand in terms of discharge pressure and flow rate. Such an approach may not satisfy required rapid changes in the operating conditions of the compression system 205 to respond to the demand of the compressed gas utilization system 265.

The constructions discussed herein approach the speed regulation of the compression system 205 by adjusting the contingent operating speed of each stage 10a, 10b, 10c synchronously, while maintaining a predetermined constant ratio between the speeds of each stage 10a, 10b, 10c. This means that the speed of each stage 10a, 10b, 10c is modified at the same time and the ratio between the rotational speeds is kept constant at all times. In one construction, a predetermined value of the speed ratio is equal to one. In this case, a speed ratio of one corresponds to the condition where two referenced stages operate at the same rotational speed. In other embodiments, the ratios are equal to values other than one, meaning the two referenced stages are operating at different rotational speeds.

During the act of regulation, as the stage speeds are synchronously changed, the ratio between the speeds will remain constant as predetermined by the individual characteristics of the compressor stages. Nonetheless, in the control algorithms, the speed ratios can be defined as variables that can be changed from one compressor configuration to another. For example, one set of simultaneous constraint equations that characterize the control approach can be summarized symbolically as follows: Equations (3a) impose the condition that the speed ratio, and consequently the rotational speed change of one stage with respect to all the other stages, is constant during the compressor control action.

$$\frac{\Delta N_1}{\Delta N_2} = K_{1-2}$$

$$\frac{\Delta N_1}{\Delta N_3} = K_{1-3}$$

$$\frac{\Delta N_1}{\Delta N_n} = K_{1-n} \quad (3a)$$

$$\begin{aligned} \Delta N_1 &= \Delta N_1 \, \delta \\ \Delta N_2 &= \Delta N_2 \, \delta \\ &\quad (3b) \\ \Delta N_n &= \Delta N_n \, \delta \end{aligned} \qquad \delta = 0,1 \quad (3c)$$

$$\frac{\Delta N_{n-1}}{\Delta N_n} = K_{(n-1)-n}$$

$$Abs(P_{disch} - P_{demand}) \le \varepsilon_P \quad \text{(Constant Pressure Control)} \qquad (3d)$$

$$Abs(Q_{disch} - Q_{demand}) \le \varepsilon_Q \quad \text{(Constant Delivered Capacity Control)} \qquad (3e)$$

where:

| | |
|---|---|
| $\Delta N_i$ | = Speed change of the *ith* stage |
| $K_{i-j}$ | = Speed ratio of the *ith* stage with respect to the *jth* stage. The speed ratio is a real number in a mathematical sense. |
| $\delta$ | = a Kronecker delta function which can be interpreted as a control decision variable suggesting that stage speed variations must occur synchronously. |
| $\varepsilon_P$ | = Error related to pressure |
| $\varepsilon_Q$ | = Error related to capacity |
| $P$ | = Pressure |
| $Q$ | = Capacity |

Equations (3b) identify the synchronous occurrence of the rotational speed change with variable $\delta$ assuming a value of zero when no speed regulation is in process, and assuming a value of one when compressor control, with reference to stage speed changes, is required. Equations (3d) and (3e) impose the condition that the speed change satisfies the demand of the compressed gas utilization system 265 within a certain tolerance.

The compressor control scheme is enhanced by an aerodynamic design of the compression stages 10a, 10b, 10c that accommodates a synchronous variation of the rotational speed of the stages 10a, 10b, 10c while insuring stable changes in compressor head, pressure ratio, and capacity. Such aerodynamic design elements include evenly distributed impeller blade loading, advanced 3-D impeller blade shapes, and a 3-D diffuser design. Thus, the illustrated construction operates in a way that avoids boundary conditions at the inlet or at the discharge of a stage that may cause the surge limit 310 or choke limit 315, shown in Fig. 3, to be active constraints.

Fig. 3 also shows paths 320 along which the efficiency of the compression process is constant. The highest efficiency of the stages 10a, 10b, 10c is planned at the nominal operating conditions and, in the figure, is identifiable by the region at the center of the constant efficiency paths 320. The deterioration in efficiency can be kept to a minimum as the operating point $O_o$ departs from the design point, such that, for dynamically similar stages, a synchronous stage speed change, while maintaining a constant ratio between the speed of each stage, does not significantly deteriorate the efficiency of the multi-stage compression system 205.

Also, the design of dynamically similar stages, in aerodynamic terms, allows stable operation during speed variations, without incurring transient instability issues. The aerodynamic design of the stages 10a, 10b, 10c augments the performance of the control system 290 by resulting in a modest deterioration of the design optimal efficiency within a significant speed range.

Further, a control inlet throttling valve is not required in the multi-stage compression system 205, thus reducing the cost and complexity of the system 205.

Finally, compressor unload is achieved by synchronously reducing the speeds of the stages 10a, 10b, 10c while maintaining a constant relative speed ratio. Opening the blow-off valve 285 accommodates the transient unload event of the compression system 205, as the check valve 280 isolates the compression system 205 from the utilization system 265. The control system 290 may also allow the complete shut-down of the compression system 205 in the event that the utilization system 265 does not require the operation of the compression system 205.

Various features and advantages of the invention are set forth in the following claims.

**Claims**

1. A multi-stage compression system comprising:

    a plurality of centrifugal compression stages (10a, 10b, 10c), each stage including an impeller (85) and a distinct variable speed motor (15a, 15b, 15c) coupled to the impeller, each variable speed motor operable at a speed between a first speed and a second speed; and
    a control system (290) connected to each of the variable speed motors (15a, 15b, 15c) and **characterized in that** the control system is operable to vary the speed of each motor, the speed of each motor being varied simultaneously such that a ratio of the speed of any two variable speed motors remains constant during all operation of the compression system.

2. The multi-stage compression system of claim 1, wherein a fluid flow passes through the plurality of centrifugal compression stages (10a, 10b, 10c) sequentially.

3. The multi-stage compression system of claim 1, wherein the plurality of centrifugal compression stages (10a, 10b, 10c) are mechanically de-coupled from each other.

4. The multi-stage compression system of claim 1, wherein the control system (290) includes at least one sensor positioned to measure a parameter of a fluid flow passing through the plurality of centrifugal compression stages (10a, 10b, 10c), wherein the parameter is at least one of a pressure, a temperature, and a mass flow rate.

5. The multi-stage compression system of claim 4, further comprising a valve (285) disposed between the plurality of centrifugal compression stages (10a, 10b, 10c) and a gas utilization system, the valve (285) operable to discharge a portion of the fluid flow from the multi-stage compression system (265).

6. The multi-stage compression system of claim 5, wherein the control system (290) is operable to vary the speed of the variable speed motor (15a, 15b, 15c) and to operate the valve (285) at least partially in response to the measured parameter.

7. The multi-stage compression system of claim 1, wherein a mass flow rate of the plurality of centrifugal compression stages (10a, 10b, 10c) is substantially constant.

8. The multi-stage compression system of claim 1, wherein a mass flow rate of the plurality of centrifugal compression stages (10a, 10b, 10c) is variable in response to use of a fluid flow at a gas utilization system (265).

9. The multi-stage compression system of claim 1, wherein a first variable speed motor (15a, 15b, 15c) operates at a different speed than a second of the variable speed motors (151, 15b, 15c).

10. A method of controlling a multi-stage compression system to deliver gas to a gas utilization system (265) that uses the gas at a variable rate, the method comprising:

    operating a first motor to drive a first centrifugal compressor stage (10a) at a first speed to produce a fluid flow;
    directing the fluid flow to a second centrifugal compressor stage (10b);
    operating the second motor (15b) to drive a second centrifugal compressor stage (10b) at a second speed; and
    **characterized by**

varying the first speed and the second speed in response to the variable rate and in unison such that a ratio between the first speed and the second speed remains constant during all operation of the compression system.

11. The method of claim 10, further comprising directing the fluid flow from the second centrifugal compressor stage (10b) to a third centrifugal compressor stage (10b), and operating the third centrifugal compressor stage (10c) at a third speed.

12. The method of claim 11, further comprising varying the third speed in unison with the first speed and the second speed such that a second ratio between the first speed and the third speed and a third ratio between the second speed and the third speed remain constant, wherein the first speed does not equal the second speed.

**Patentansprüche**

1.  Mehrstufiges Kompressionssystem, das aufweist:

    eine Vielzahl von Zentrifugalkompressionsstufen (10a, 10b, 10c), wobei eine jede Stufe ein Laufrad (85) und einen einzelnen Motor (15a, 15b, 15c) mit veränderlicher Drehzahl umfasst, der mit dem Laufrad verbunden ist, wobei ein jeder Motor mit veränderlicher Drehzahl mit einer Drehzahl zwischen einer ersten Drehzahl und einer zweiten Drehzahl funktionsfähig ist; und
    ein Steuersystem (290), das mit einem jeden der Motoren (15a, 15b, 15c) mit veränderlicher Drehzahl verbunden und **dadurch gekennzeichnet ist, dass** das Steuersystem funktionsfähig ist, um die Drehzahl eines jeden Motors zu verändern, wobei die Drehzahl eines jeden Motors gleichzeitig verändert wird, so dass ein Verhältnis der Drehzahl von irgendwelchen zwei Motoren mit veränderlicher Drehzahl während des gesamten Betriebes des Kompressionssystems konstant bleibt.

2.  Mehrstufiges Kompressionssystem nach Anspruch 1, bei dem ein Fluidstrom durch die Vielzahl der Zentrifugalkompressionsstufen (10a, 10b, 10c) aufeinander folgend gelangt.

3.  Mehrstufiges Kompressionssystem nach Anspruch 1, bei dem die Vielzahl der Zentrifugalkompressionsstufen (10a, 10b, 10c) mechanisch voneinander ausgekuppelt werden.

4.  Mehrstufiges Kompressionssystem nach Anspruch 1, bei dem das Steuersystem (290) mindestens einen Sensor umfasst, der positioniert ist, um einen Parameter eines Fluidstromes zu messen, der durch die Vielzahl der Zentrifugalkompressionsstufen (10a, 10b, 10c) gelangt, wobei der Parameter mindestens einer von einem Druck, einer Temperatur und einer Massenströmungsrate ist.

5.  Mehrstufiges Kompressionssystem nach Anspruch 4, das außerdem ein Ventil (285) aufweist, das zwischen der Vielzahl der Zentrifugalkompressionsstufen (10a, 10b, 10c) und einem Gasnutzungssystem angeordnet ist, wobei das Ventil (285) funktionsfähig ist, um einen Teil des Fluidstromes aus dem mehrstufigen Kompressionssystem (265) abzulassen.

6.  Mehrstufiges Kompressionssystem nach Anspruch 5, bei dem das Steuersystem (290) funktionsfähig ist, um die Drehzahl des Motors (15a, 15b, 15c) mit veränderlicher Drehzahl zu verändern, und um das Ventil (285) mindestens teilweise als Reaktion auf den gemessenen Parameter zu betätigen.

7.  Mehrstufiges Kompressionssystem nach Anspruch 1, bei dem eine Massenströmungsrate der Vielzahl der Zentrifugalkompressionsstufen (10a, 10b, 10c) im Wesentlichen konstant ist.

8.  Mehrstufiges Kompressionssystem nach Anspruch 1, bei dem eine Massenströmungsrate der Vielzahl der Zentrifugalkompressionsstufen (10a, 10b, 10c) als Reaktion auf die Benutzung eines Fluidstromes in einem Gasnutzungssystem (265) veränderlich ist.

9.  Mehrstufiges Kompressionssystem nach Anspruch 1, bei dem ein erster Motor (15a, 15b, 15c) mit veränderlicher Drehzahl mit einer anderen Drehzahl arbeitet als ein zweiter der Motoren (15a, 15b, 15c) mit veränderlich Drehzahl.

10. Verfahren zum Steuern eines mehrstufigen Kompressionssystems, um Gas einem Gasnutzungssystem (265) zuzuführen, das das Gas mit einer veränderlichen Geschwindigkeit nutzt, wobei das Verfahren die folgenden Schritte aufweist:

Betätigen eines ersten Motors, um eine erste Zentrifugalkompressionsstufe (10a) mit einer ersten Drehzahl anzutreiben, um einen Fluidstrom zu erzeugen;

Lenken des Fluidstromes zu einer zweiten Zentrifugalkompressionsstufe (10b);

Betätigen des zweiten Motors (15b), um eine zweite Zentrifugalkompressionsstufe (10b) mit einer zweiten Drehzahl anzutreiben; und **gekennzeichnet durch**

Verändern der ersten Drehzahl und der zweiten Drehzahl als Reaktion auf die veränderliche Geschwindigkeit und in Übereinstimmung, so dass ein Verhältnis zwischen der ersten Drehzahl und der zweiten Drehzahl während des gesamten Betriebes des Kompressionssystems konstant bleibt.

11. Verfahren nach Anspruch 10, das außerdem die Schritte des Lenkens des Fluidstromes von der zweiten Zentrifugalkompressionsstufe (10b) zu einer dritten Zentrifugalkompressionsstufe (10c) und des Betätigens der dritten Zentrifugalkompressionsstufe (10c) mit einer dritten Drehzahl aufweist.

12. Verfahren nach Anspruch 11, das außerdem den Schritt des Veränderns der dritten Drehzahl in Übereinstimmung mit der ersten Drehzahl und der zweiten Drehzahl aufweist, so dass ein zweites Verhältnis zwischen der ersten Drehzahl und der dritten Drehzahl und ein drittes Verhältnis zwischen der zweiten Drehzahl und der dritten Drehzahl konstant bleibt, wobei die erste Drehzahl nicht der zweiten Drehzahl gleich ist.

**Revendications**

1. Système de compression à plusieurs étages, comprenant :

plusieurs étages de compression centrifuges (10a, 10b, 10c), chaque étage englobant un rotor (85) et un moteur à vitesse variable distinct (15a, 15b, 15c) accouplé au rotor, chaque moteur à vitesse variable pouvant fonctionner à une vitesse comprise entre une première vitesse et une deuxième vitesse ; et

un système de commande (290) connecté à chacun des moteurs à vitesse variable (15a, 15b, 15c), et **caractérisé en ce que** le système de commande est destiné à changer la vitesse de chaque moteur, la vitesse de chaque moteur étant changée de manière simultanée, de sorte qu'un rapport entre la vitesse de quelconques deux moteurs à vitesse variable reste constant au cours de l'ensemble du fonctionnement du système de compression.

2. Système de compression à plusieurs étages selon la revendication 1, dans lequel un écoulement de fluide passe à travers les plusieurs étages de compression centrifuges (10a, 10b, 10c) de manière séquentielle.

3. Système de compression à plusieurs étages selon la revendication 1, dans lequel les plusieurs étages de compression centrifuges (10a, 10b, 10c) sont désaccouplés mécaniquement les uns des autres.

4. Système de compression à plusieurs étages selon la revendication 1, dans lequel le système de commande (290) englobe au moins un capteur positionné de sorte à mesurer un paramètre d'un écoulement de fluide passant à travers les plusieurs étages de compression centrifuges (10a, 10b, 10c), le paramètre étant au moins un paramètre relatif à une pression, à une température ou à un débit massique.

5. Système de compression à plusieurs étages selon la revendication 4, comprenant en outre une soupape (285) agencée entre les plusieurs étages de compression centrifuges (10a, 10b, 10c) et un système d'utilisation de gaz, la soupape (285) étant destinée à décharger une partie de l'écoulement de fluide du système de compression à plusieurs étages (265).

6. Système de compression à plusieurs étages selon la revendication 5, dans lequel le système de commande (290) est destiné à changer la vitesse du moteur à vitesse variable (15a, 15b, 15c) et à actionner la soupape (285) au moins partiellement en réponse au paramètre mesuré.

7. Système de compression à plusieurs étages selon la revendication 1, dans lequel un débit massique des plusieurs étages de compression centrifuges (10a, 10b, 10c) est essentiellement constant.

8. Système de compression à plusieurs étages selon la revendication 1, dans lequel un débit massique des plusieurs étages de compression centrifuges (10a, 10b, 10c) peut être changé en réponse à l'utilisation d'un écoulement de fluide au niveau d'un système d'utilisation de gaz (265).

9. Système de compression à plusieurs étages selon la revendication 1, dans lequel un premier moteur à vitesse variable (15a, 15b, 15c) fonctionne à une vitesse différente de celle d'un deuxième moteur des moteurs à vitesse variable (15a, 15b, 15c).

10. Procédé de commande d'un système de compression à plusieurs étages pour fournir du gaz à un système d'utilisation de gaz (265) utilisant le gaz à un débit variable, le procédé comprenant les étapes ci-dessous :

actionnement d'un premier moteur pour entraîner le premier étage de compresseur centrifuge (10a) à une première vitesse, pour produire un écoulement de fluide ;
direction de l'écoulement de fluide vers un deuxième étage de compresseur centrifuge (10b) ;
actionnement du deuxième moteur (15b) pour entraîner un deuxième étage de compresseur centrifuge (10b) à une deuxième vitesse ; et **caractérisé par** l'étape ci-dessous :

changement de la première vitesse et de la deuxième vitesse en réponse au débit variable et à l'unisson, de sorte qu'un rapport entre la première vitesse et la deuxième vitesse reste constant au cours de l'ensemble du fonctionnement du système de compression.

11. Procédé selon la revendication 10, comprenant en outre les étapes de direction de l'écoulement de fluide du deuxième étage de compresseur centrifuge (10b) vers un troisième étage de compresseur centrifuge (10b) et d'actionnement du troisième étage de compresseur centrifuge (10c) à une troisième vitesse.

12. Procédé selon la revendication 11, comprenant en outre l'étape de changement de la troisième vitesse, à l'unisson avec la première vitesse et la deuxième vitesse, de sorte qu'un deuxième rapport ente la première vitesse et la troisième vitesse, et un troisième rapport entre la deuxième vitesse et la troisième vitesse restent constants, dans lequel la première vitesse n'est pas égale à la deuxième vitesse.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2372539 A